# EUROPEAN PATENT APPLICATION

(11) **EP 0 698 839 A1**
(43) Date of publication of application: **28.02.1996**
(21) Application number: 95500121.9
(22) Date of filing: 22.08.1995
(51) Int. Cl.: G05D 16/20, B01D 35/14, E04H 4/12

(54) **Control system for the condition of filters and the discharge of filtered water in a purifier**

(30) Priority: 23.08.1994 ES 9401853
(71) Applicant: Ballester Munoz, Francisco, Puente Arce 39478, Cantabria (ES)
(72) Inventor: Ballester Munoz, Francisco, Puente Arce 39478, Cantabria (ES)

(57) **Abstract**

This system has special applications in a swimming pool with water absorption filters (1) connected to pumps (3), by means of suction pipes (2) which collect the filtered water. The pumps are connected to delivery pipes which return the water to the swimming pool. The unique characteristic of the system is a pressurestat which is connected to the control circuit (6) and is positioned between the pump and the delivery pipes. The pressurestat gives a signal when the pressure goes below a predetermined value and sets off an alarm in the control circuit indicating that the filters must be replaced.

The control circuit is connected to a time counter (7) which indicates the working period of the pumps and calculates the total volume of filtered water having taken account of the previously calculated average discharge inputted in to the control circuit.

The system avoids carrying out the continued measurement of the discharge or the confirmation of the condition of the filters.

## Description

### OBJECTIVE OF THE INVENTION

As described in the summary of this report, the invention consists of a control system for the condition of filters and the discharge of filtered water in a purifier with particular application in swimming pools with water absorption filters (1), connected to pumps (3) by means of suction pipes (2) which collect the filtered water. The pump is connected to the delivery pipes which return the water to the swimming pool and which must produce an acoustic and visual signal indicating that the filters should be either replaced or cleaned out.

Another objective of the invention consists in indicating the quantity of water filtered between changes or between clean-outs of the filter.

### ANTECEDENTS OF THE INVENTION

The technical maintenance of the conventional water purifier requires a check-up of the water discharge driven by the pumps as well as a check-up of the conditions of cleanliness of the filters. Such check-ups must be made in-situ, i.e. the purifier must be accessible, requiring the top of the purifier to be lifted. The top has a security mechanism which is activated when lifted out of its normal position, thereby cutting off the electricity supply and causing the pumps to stop working altogether. For this reason the technical personnel have to manually dodge the security mechanism in order to carry out the check-up, having to cope with the grave inconveniences that this represents.

Furthermore, it is common to find that, once the check-up has been carried out, there is no need to change or clean-out the filter, forcing unnecessary maintenance visits to the purifier.

The continuous control of the discharge is possible with the use of a flowmeter in the delivery piping . The measurements are very difficult to take since the tube takes up a lot of space, and , as previously mentioned, the top of the purifier has to be removed. Furthermore, in order to confirm the conditions of cleanliness of the filters, two negative pressure manometers are installed in the suction tubes. They indicate the suction of the pumps and hence give the condition of the filters, but are nonetheless instruments which could be removed. In order to read them, the top of the purifier must be removed with the inconveniences previously mentioned.

### DESCRIPTION OF THE INVENTION

In order to resolve the problems described previously, the invention simplifies the control system of the condition of the filters and the measurement of the water discharge. As the lid of the purifier does not need to be lifted, the check-ups in situ are avoided.

To achieve these objectives it has been established, after a series of tests, that the relationship between the discharge of filtered water and the pressures in both the suction pipes and the delivery pipes is linear.

Therefore, as the pressure decreases the discharge reduces proportionately.

The same occurs with the relation between the pressure in the delivery pipes and the pressure in the suction pipes. In other words, as the pressure in the delivery pipes decreases, the pressure in the suction pipes drops in a linear fashion.

Furthermore, it has been confirmed that as the filters become filled with dirt, the pressure drops. A pressurestat can be used to measure the pressure at a given point and hence determine the cleanliness of the filters.

This conclusion is applied to the invented system which comprises a pressurestat connected to a control system and found between the pump and the delivery pipes . The pressurestat produces a signal when the pressure falls below a predetermined value which was calculated experimentally and indicates that the filters need to be cleaned out or replaced.

Therefore, when the pressurestat falls below the predetermined pressure, it gives a signal that is detected by the control circuit which sets off an alarm indicating that the filters need to be cleaned out or replaced.

The control circuit also has a timer which is activated when the alarm goes off. After a given time period elapses, and the anomaly has not been corrected, the timer shuts the pumps down and hence forces the clean-out or replacement to be carried out.

From the experimental conclusions stating that the discharge is directly proportional to the pressure in the delivery piping, the average discharge can be deduced. The average discharge is the average between the discharge when the filters are clean and the discharge when the pressure in the pipes drops to the limiting value set in the pressurestat.

Therefore, by multiplying the working period of the valves by the value of the average discharge, one obtains the total volume of water that has been filtered.

In order to make this calculation, the control circuit is connected to a time counter which indicates the working time period of the pumps.

The invention makes it possible to be sure, without having to remove the lid from the purifier, that the cleanliness of the filters is such that there is no need for replacement, as long as the alarm does not go off. The calculations for the volume of filtered water can be controlled from the electric board panel making it unnecessary to open the purifier.

Equally, the quantity of purifier water is shown on the electric board panel, which avoids the removal of the purifier's lid and simplifies greatly the measurement of the volume of filtered water.

The system is depicted in the diagram that follows this description of the invention.

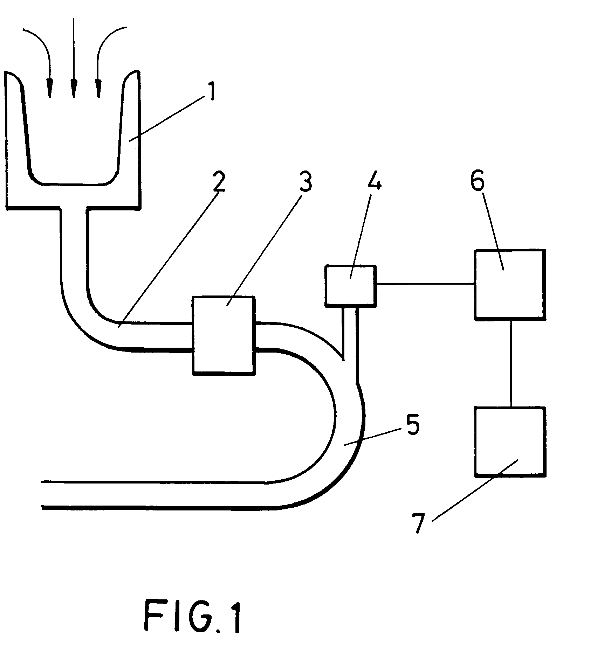

### BRIEF STATEMENT ABOUT THE FIGURE

The first and only figure following the description of the invention shows a schematic diagram of the system.

### DESCRIPTION OF THE CONSTRUCTION METHOD

What follows is a description of the invention based on the figure previously mentioned. Due to the difficulties found in the control system forestablishing the condition of the filters and the measurement of the filtered water discharge in a purifier for swimming pools, a series of tests were carried out with the objective of simplifying the system.

Conventionally, it is known that the water to be treated, once inside the purifier, has to pass through the two filtering bags. These bags are made from polystyrene textiles which are called 'active membranes' and which have been developed from their use in medicine for dialysis. Both bags are placed inside vertically positioned cylindrical containers.

In the bed of these cylindrical containers there are openings to the suction pipes (2) of the pumps (3), which receive the filtered water under pressure and forces it through the delivery piping (5) and back to the swimming pool through two outlets, one of which is situated on the left side at the bottom end of the pool, and the other on the front side at the upper part.

With this framework in mind, and the aim to determine the effective capacity of purification, several tests were carried out to find the relationship between the discharge of filtered water and the pressure in both suction and delivery pipes .

In order to obtain the data from the test, the following elements were installed in the system:
a) A flowmeter was placed in the U-tube (5) for the purpose of registering the discharge of water driven by the pumps at a distance ten times the diameter of the pipe.
b) Three manometers were placed in series with the flowmeter just mentioned. The one with the greatest precision, a water column manometer, was chosen for obtaining the data necessary for the graphs that were subsequently drawn. This manometer is found at the exit from the pump (3). The other two manometers were used to verify the pressure fall of the water as it passed by the flowmeter in order to check its influence on the test results. Therefore, one was placed upstream and another downstream of the flowmeter.
c) Lastly, a vacuometer was also installed in the suction pipes (2) in order to measure the suction pressure produced by the pumps (3).

The objective of the measurements consisted in relating the pumped discharge with the pressure at exit of this discharge and to produce a graph which would reflect any variations. Variations include the most basic situation where the purifier does not have any filtering bags, the situation where the filters are clean, and finally culminating to the point where both filters are dirty.

Throughout the experiments, both manometers and the column manometer, indicated the same position which led to the conclusion that the flowmeter does not cause any significant pressure drop.

With regards to the pressures registered by the vacuometer in the suction pipes it has been possible to confirm that these pressures maintain a linear relationship with the pressures obtained in the delivery piping, varying from - 25 kPa for the case when the filters are completely cleaned up to - 53 kPa at the point when the filters need to be replaced.

Experiments were made without filtering bags, with clean filtering bags, and with dirty filtering bags. The obtained pressure values were plotted and produced a linear relationship between the discharge and the pressure. The linear function also showed the gradual drop in the pressure and discharge as the purifier was in use and the filters became dirty.

The following step was to study the relationship between the pressure in the delivery pipes (5) and that in the suction pipes (2) of the pump (3). The results gave a linear relationship which showed the gradual pressure loss in both pipes.

Therefore, the value of suction pressure represents a parameter that determines the correct functioning of the filters (1), indicating the condition in which they are to be found.

Furthermore, since the suction pressure in the suction pipes is proportional to the pressure in the delivery pipes it is possible to relate the delivery pipes' pressure to the condition of the filters.

The pressure below which the filters become dirty and need cleaning out or replacing was experimentally checked.

Therefore, the particular characteristic of the invention lays in that the delivery piping (5) contains a pressurestat that produces a signal when the pressure falls below the experimentally obtained value below which the filters are to be found dirty.

The pressurestat (4) is connected to the control circuit (6) which in turn is connected to a time counter (7).

When the pressurestat reaches the pre-set value, it sends a signal to the control circuit setting off an alarm, which is installed in the electric board panel and which consists of a red light and an acoustic signal. An alarm going off is a sensible and efficient indication that the filters must be either cleaned out or replaced.

The total volume of filtered water can be determined with the previous knowledge of the experimentally calculated average discharge of water circulating in the purifier, and the number of working hours recorded by the time counter (7). In this manner a complete control of the filtering system is carried out.

The acoustic alarm is turned off, yet a light emitting signal remains until the anomaly is corrected (the loss of pressure in the delivery piping is due to the accumulation of filth in the filters). If the alarm has not been turned off after a given time period elapses (recorded by a timer that is introduced in the circuit control), then the pumps (3) automatically stop working as a security measure. In order to re-establish normal working conditions the filters must be either cleaned out or replaced.

Equally, the alarm will go off if one of the pumps fail, as the pressure would drop below the pre-set value in the pressurestat (4).

Lastly, the dosification of additives in the swimming pool for the control of chlorine and the pH can be carried out in the very same filtering system. A pump is introduced in to the purifier which is capable of carrying out the dosification of the required discharge.

## Claims

**1.- Control system for the condition of filters and the discharge of filtered water in a purifier** has special applications in a swimming pool with water absorption filters (1) connected to pumps (3), by means of suction pipes (2) which collect the filtered water. The pumps are connected to delivery pipes which return the water to the swimming pool. The unique characteristic of the system is in the use of a pressurestat which is connected to the control circuit (6) and is positioned between the pump and the delivery pipes . The pressurestat gives a signal when the pressure goes below a predetermined value and sets off an alarm in the control circuit indicating that the filters must be replaced.

**2.- Control system for the condition of filters and the discharge of filtered water in a purifier,** as described in the first property right, is unique in that the control circuit (6) has a timer which is activated when the alarm goes off. After a pre-set time the pumps shut down unless the anomaly has been corrected.

**3.- Control system for the condition of filters and the discharge of filtered water in a purifier,** as described in the first property right, is unique in that the control circuit is connected to a time counter (7) which indicates the working period of the pumps. With this figure and the average discharge, previously calculated as the average between the maximum measured discharge when the filters are clean and the discharge when the pressure drops to the value set in the pressurestat, it is possible to calculate the volume of filtered water. For the purposes of doing this calculation, the average discharge value is recorded in the control circuit.
